# EUROPEAN PATENT SPECIFICATION

(11) **EP 2 159 138 B1**
(45) Date of publication and mention of the grant of the patent: **02.11.2011**
(21) Application number: 09168550.3
(22) Date of filing: 25.08.2009
(51) Int. Cl.: B62H 5/14, E05B 67/28, B62K 19/40, E05B 71/00

(54) **Wheel fork with integrated lock**
Radgabel mit integrierter Sperre
Fourche pour bicyclette dotée d'un verrou intégré

(30) Priority: 25.08.2008 NL 2001916
(43) Date of publication of application: 03.03.2010
(73) Proprietor: STENMAN HOLLAND B.V., 3903 AV Veenendaal (NL)
(72) Inventor: Bol, Jurriaan Gerrit, 6905 JS Zevenaar (NL)
(74) Representative: Ketelaars, Maarten F.J.M.

(56) References cited:
- EP-A- 0 415 499
- EP-A- 1 752 366
- EP-A- 2 036 810
- CN-Y- 2 494 784
- DE-A1- 19 648 678
- DE-A1- 19 803 307
- DK-C- 65 675

## Description

The present invention relates to a wheel fork with an integrated lock.

Such a wheel fork is know from EP 0415499 wherein a ring lock is accommodated within the rear fork in an enclosing section made up by two U-shaped, bent leg portions that form an outer housing for a ring lock.

A drawback of this known rear fork is its complex installation when integrating the lock with the rear fork both during manufacturing of the rear fork and during service life of the rear fork. Service and replacement of the lock is very laborious. Moreover the U-shaped housing parts are less robust than a closed profile.

Such a wheel fork is also know from EP1752366 which discloses the preamble of independent claim 1 and wherein a commonly known ring lock with its own housing is mounted in one cavity of the wheel fork.

A drawback of the known wheel forks is the relatively large volume these forks takes up to be able to mount the ring lock therein. Furthermore, these constructions require high strength materials for both the housing of the ring lock itself and the wheel fork.

DK65675C discloses a saddle fork with an integrated bolt. The bolt is provided in both fork legs and hinders an evenly distributed integration of a lock system in the fork. It is further not elaborated how the bolt and its lock part, number 2 in its drawings, work together. Furthermore, the bolt needs an almost complete circle.

EP2036810 discloses a wheel fork with a receiving provision for receiving a commonly known ring lock. The wheel fork is not a part of the housing of the ring lock. A drawback of the known wheel forks is the relatively large volume this fork takes up to be able to mount the ring lock therein. Furthermore, these constructions require high strength materials for both the housing of the ring lock itself and the wheel fork. The locking of such a commonly known ring lock is provided near the rear end of the bolt.DE 19648678 discloses a central locking system for a motorbike and other two-wheelers. DE19648678 does not relate to a wheel fork with an integrated lock.

### Summary of the invention

The invention aims to provide a wheel fork that does not have the above mentioned drawbacks, or at least suffer from the drawbacks to a lesser degree. According to a first aspect of the invention this is realized with a wheel fork with an integrated lock, for accommodating a wheel therein, wherein the wheel fork comprises a first fork leg and a second fork leg which extend at opposite sides of a wheel accommodation space, the first fork leg comprising a cavity and a passage in connection with the cavity and facing the wheel accommodation space, a bolt system comprising a ring-segment shaped bolt having a ring-segment centre line, positioned in the cavity in the first fork leg in a bolt plane defined by said first and second fork leg and movable along its centre line between a release state and a blocking state, and which bolt in its the release state essentially extends in the cavity and in its blocking state extends through the passage towards the second fork leg in the wheel accommodation space to block the wheel, a lock system comprising a lock for locking said bolt in its blocking state, wherein said first and second fork form at least part of a lock housing of said bolt system and lock system, and wherein the lock system engages with an end of the bolt facing the wheel accommodation space to block the bolt in its blocking state. Engaging with the end of the bolt facing the wheel accommodation space is advantageous because it enables the use of a shorter bolt that is therefore more easy to integrate in the wheel fork, specifically the first fork leg. Furthermore, engaging with the end of the bolt facing the wheel accommodation space is advantageous because it enables a combination of firstly, easy assembling and/or disassembling of the bolt system in the first fork leg and of the lock system in the second fork leg, and secondly, securely locking of both the bolt system and lock system to the fork by the bolt, when the bolt is in its blocking state.

The wheel fork of the invention can be used in a bicycle or motor-assisted bicycle. The wheel fork of the invention can also be used in other vehicles, like a scooter, motor bike, and other vehicles.

The invention advantageously houses the bolt in the wheel fork, specifically in a central part of the wheel fork, more specifically in a fork leg, enabling to provide a compact integration of a wheel fork and a lock.

In an embodiment of the wheel fork, the end of the bolt facing the wheel accommodation space comprises a notch, and the lock system comprises a locking member engaging the notch to lock the bolt in its blocking state.

In an embodiment of the wheel fork, the cavity is essentially provided within a circumferential fork wall.

In an embodiment of the wheel fork, the cavity is provided in an essentially hollow fork leg. In another embodiment, the recess is also provided in an essentially hollow fork leg.

In the invention, the bolt can be housed directly in the hollow fork leg, the wheel fork with integrated lock is even more compact and as a consequence the use of high grade materials, in connection with providing a lock, is minimized. Moreover forcing of the bolt is discouraged for forcing of the bolt requires damaging the wheel fork itself resulting in a useless, or less useful, wheel fork.

In fact, in the wheel fork of the invention, breaking the lock will in most cases damage the wheel fork and thus make the vehicle useless and/or almost worthless. This approach does not require the housing of the lock to be unbreakable or as strong as the known locks.

In an embodiment of the wheel fork the first and second fork leg are essentially hollow.

In an embodiment of the wheel fork the bolt extends in its block state partially into the fork leg substantially opposite the passage.

In an embodiment of the wheel fork, the wheel fork comprises a recess for accommodating the lock system therein, and wherein the lock locks the bolt in the release state and/or block state.

In an embodiment of the wheel fork, the recess for accommodating the lock system therein is provided in the second fork leg.

In an embodiment, said bolt system comprises a wall part closing off said opening in said cavity.

In an embodiment, wherein the cavity has an opening in at least one fork wall of said first fork leg.

In an embodiment of the wheel fork the lock is provided with the fork leg opposite the passage.

In an embodiment of the wheel fork, the wheel fork partly constitutes a housing for the bolt. This enables one to provide a compact integration of a wheel fork and a lock. The demands on the integrity of this housing are not so severe, as already explained above. Breaking the lock or bolt will in most cases seriously damage the fork.

In an embodiment of the wheel fork, the wheel fork partly constitutes a housing for the lock. This enables one even more to provide a compact integration of a wheel fork and a lock.

In an embodiment of the wheel fork, the housing contributes to the mechanical strength of the wheel fork. This discourages a potential burglar from forcing the bolt provided in the housing because this will result in a useless wheel fork or at least a less useful wheel fork.

In an embodiment of the wheel fork, the housing mainly determines the mechanical strength of the wheel fork. This discourages a potential burglar even more from forcing the bolt provided in the housing.

In an embodiment of the wheel fork, the bolt comprises an operating member for moving the bolt in the cavity between the release state and the block state, wherein the operating member extends in a slot in the fork leg, and outside the fork leg to provide direct access to the operating member to make the bolt operable.

In an embodiment of the wheel fork, the wheel fork comprises means to inhibit operation of the operating member. Inhibiting the operation of the operating member is advantageously and prevents unintended blocking of a wheel accommodated in the wheel fork.

In an embodiment of the wheel fork, the inhibiting means comprise a projecting wall member that extends along the operating member from the outer circumference of the fork leg , wherein the operating member is inside the perimeter of the projecting wall member when the bolt is in the release state.

In an embodiment of the wheel fork, the inhibiting means comprise an abutment which provides a blocking position wherein the operating member is blocked and the bolt inoperable, and a spring biasing the operating member towards its blocking position.

In an embodiment of the wheel fork, the operating member comprises the spring.

In an embodiment of the wheel fork, the line of force of the spring is essentially perpendicular to the bolt plane.

In an embodiment of the wheel fork with said lock system in said recess, the lock system comprises a lock system housing which can slide in and out of said recess, and which locks in said recess at least when said lock system lock said bolt.

In an embodiment the bolt system comprises a bolt system housing which can slide in and out of said cavity and wherein said bolt in its locking state locks said bolt system in said cavity, which housing in an embodiment comprises an attachment means for locking or snapping said bolt system in said cavity.

The invention further relates to a wheel fork with an integrated lock, for accommodating a wheel therein, wherein the wheel fork comprises a first fork leg and a second fork leg which extend at opposite sides of a wheel accommodation space, the wheel fork comprising a cavity and a passage in connection with the cavity and facing the wheel accommodation space, a bolt system comprising a ring-segment shaped bolt having a ring-segment centre line, positioned in the cavity in the first fork leg in a bolt plane defined by said first and second fork leg and movable along its centre line between a release state and a blocking state, and which bolt in its the release state essentially extends in the cavity and in its blocking state extends through the passage towards the second fork leg in the wheel accommodation space to block the wheel, a lock system comprising a lock for locking said bolt in its blocking state, wherein said bolt system and said lock system are mounded on a frame and said frame is mounted in said cavity.

Again, the wheel fork with integrated lock is easy to produce. The fork walls can form at least part of the lock housing. This allows a lock partly based on the principle that breaking the lock will make the object almost useless or worthless.

In an embodiment, the first and second fork leg are interconnected via an integrated central fork part. In a further embodiment, the cavity extend in said integrated central fork part. Thus, a strong wheel fork can de made with integrated lock.

In an embodiment, said fame comprises a first frame part onto which said bolt system is mounted and a second frame part onto which said lock system is mounted, and said first frame part and second frame part can be fixed to one another when mounting said frame in said cavity.

In an embodiment, said frame comprises a wall part for closing off said cavity when said frame is mounted in said cavity. Said wall part can be made of plastic or aluminium, for instance.

In an embodiment, said frame is snapped into said cavity. It may also be possible to mount said frame into said cavity and fix it by means of one or more screws, for instance.

The features described above in relation to other embodiments of the invention can be combined with the embodiment.

The first and second fork legs form at least part of a lock housing of said bolt system and lock system.

The invention further relates to a bike provided with the wheel fork according to the invention.

The invention further relates to a bolt, intended and suitable for the wheel fork according to the invention.

The invention further relates to a method to operate the bolt of the wheel fork, comprising moving an operating member against a biasing force away from a blocking position to make the operating member operable, and shifting the bolt by means of the operating member.

The invention further relates to a method to assemble the wheel fork, comprising the steps of providing a wheel fork constituting housing comprising the cavity and the recess, assemble the bolt into the cavity, and assemble the lock system in the recess.

The invention further relates to a device comprising one or more of the characteristic features described in the accompanying description and/or displayed in the accompanying drawings.

The invention further relates to a method comprising one or more of the characteristic steps described in the accompanying description and/or displayed in the accompanying drawings.

The various aspects discussed in this patent can be combined in order to provide additional advantages.

### Description of the drawings

The invention will be further elucidated referring to an embodiment shown in the schematic drawings wherein shown in:
Fig. 1 in perspective view a wheel fork;
fig. 2 a perspective view of a central part or the rear fork in more detail;
fig 3 shows the central part of fig. 2 wherein the bolt is in a block state;
fig 4. shows the central part of fig. 2 in an exploded view.
Fig. 5a-5d show various embodiments of an operating member for a bolt in a wheel fork.

### Detailed description of embodiments

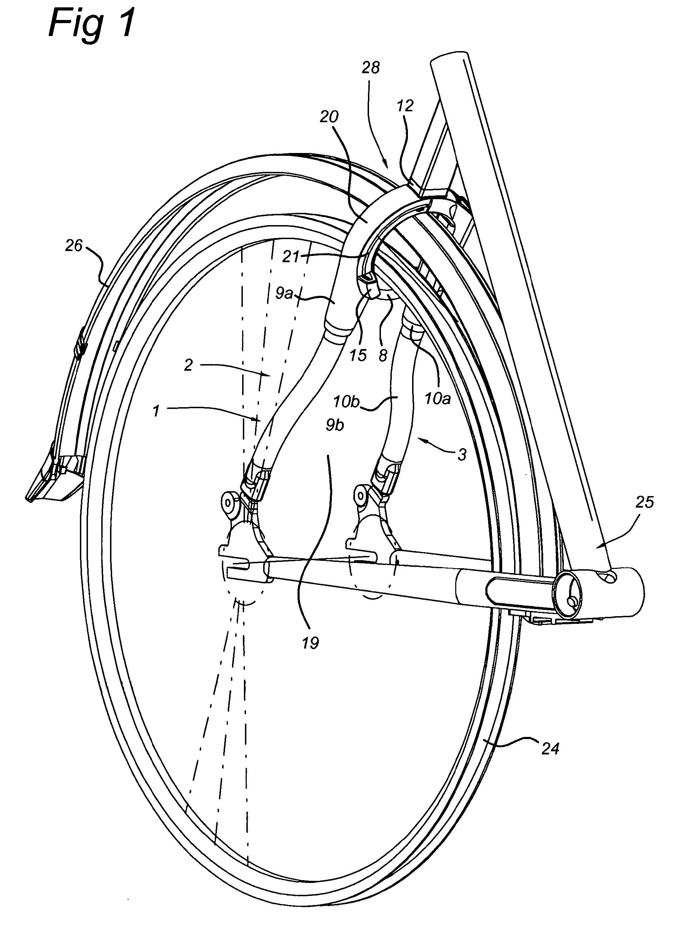

Figure 1 shows an embodiment of the wheel fork 1. The wheel fork 1 The wheel fork 1 or fork 1 comprises two opposing fork legs, a first fork leg 2 and second fork leg 3. It further has a central fork part 28 joining the two fork legs 2, 3 at their upper leg members 9a, 9b. The two fork legs 2, 3 define a wheel accommodation space 19 to accommodate a wheel 24 therein, more specifically the wheel accommodation space 19 extends between the fork legs 2, 3. The wheel fork 1 is connected to a wheel 24 at its lower leg members 9b, 10b. The wheel fork 1 may be connected to a wheel 24 by means of shock absorbing members (not shown). The wheel fork 1 is further connected to a frame 25 (partly shown) of a bike. More specifically, here the wheel fork 1 is fixedly connected to the frame 25 by means of a mounting member 12 that is accommodated in the frame 25 and is close fitted thereto. Wheel fork 1 may be connected to the frame 25 by shock absorbing means (not shown). A mudguard 26 may be connected to the central part 28 of the wheel fork 1.

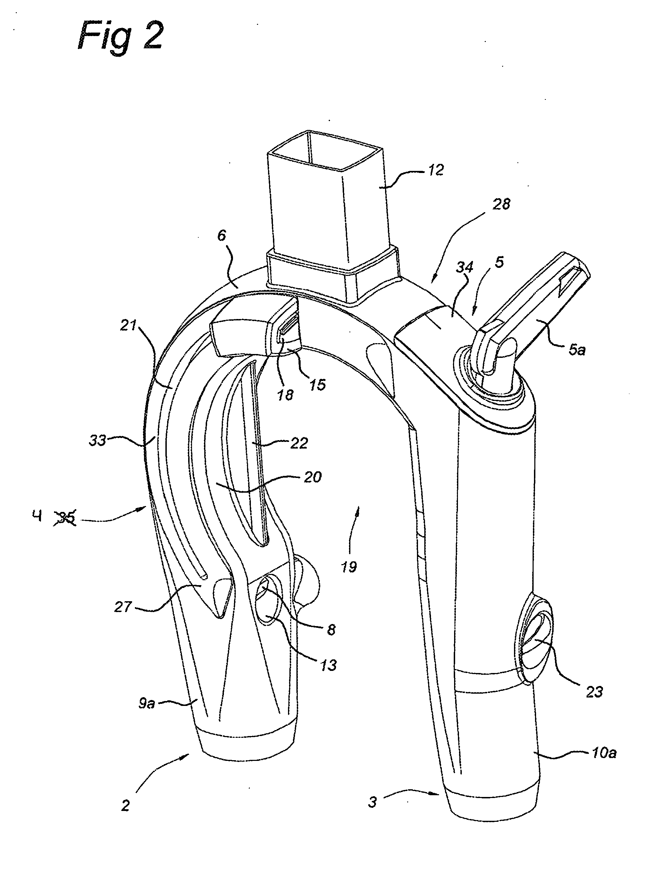

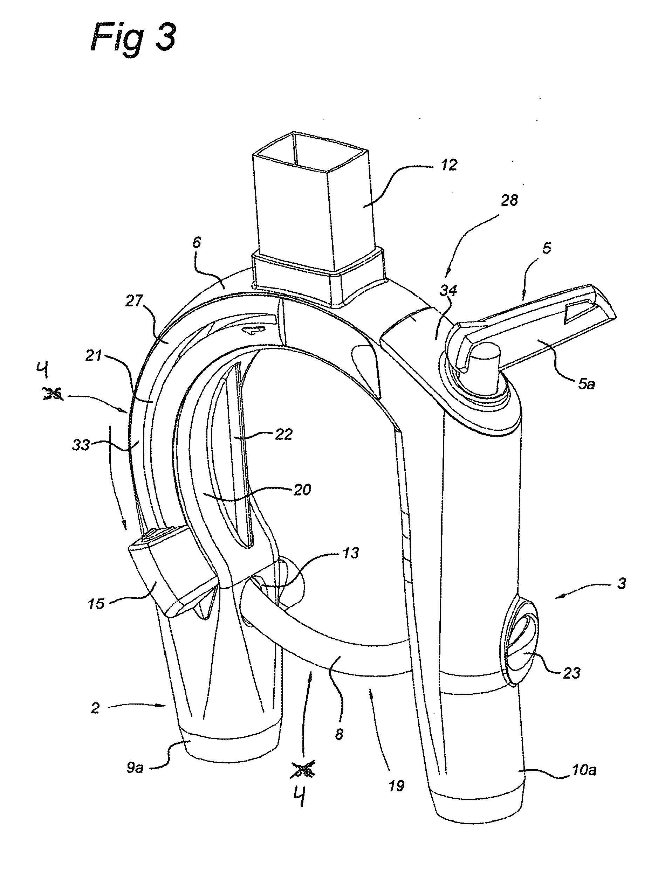

A bolt 8 is shown in its block state wherein the bolt 8 blocks a wheel 24 that is accommodated in the wheel accommodation space 19 of the wheel fork 1. The bolt 8 is movable connected with the wheel fork 1. The bolt 8 may have a ring-segment shape. The bolt 8 moves in a bolt plane between a block state shown in fig. 3 and a release state shown in fig. 2. In an embodiment the bolt plane extends essentially between the upper leg members 9a, 10a, more specifically the bolt plane is parallel with the accommodation space 19, even more specifically the bolt plane is within the accommodation space 19. The bolt plane is defined by the first fork leg and the second fork leg. An operating member 15 is connected, more specifically fixedly connected, with the bolt 8 to operate the bolt 8, more specifically to move the bolt 8 between its block state and its release state.

Fig. 2 and 3 show in more detail the central part 28 of the wheel fork 1. In fig. 2 the bolt 8 is in its release state. In fig. 3 the bolt 8 is in its block state. The wheel fork 1 comprises the bolt 8, more specifically the wheel fork 1 houses the bolt 8. In an embodiment the bolt 8 may be housed in the central part 28 of the fork and/or a fork leg 2, 3, more specifically the bolt 8 may be housed in an upper leg member 9a, 10a. In fig 2 the bolt 8 is in its release state wherein the bolt 8 is housed in the upper leg member 9a. The wall 20 of the fork leg 2, specifically the upper leg member 9a encloses or surrounds the bolt 8. The ring segmented part of the central part 28 of the fork may be strengthened by a strengthening rib 22 to even more improve the strength of the wheel fork 1. The wheel fork 1 comprises a passage 13 to enable the bolt 8 to extend into the wheel accommodation space 19, more specifically a fork leg 2, 3 com comprises the passage 13, even more specifically an upper leg member 9a, 10a comprises the passage 13. The fork leg 3 opposing the passage 13 comprises a lock system 5 operated by a key 5a. More specifically the upper leg member 10 a comprises the lock system 5. The fork leg 3 comprises a point of connection 23 adjacent the lock system 5 to connect a chain lock to the wheel fork 1 at the point of connection 23.

In fig 3 the bolt 8 is in its block state wherein the bolt 8 extends through the passage 13 into the wheel accommodation space 19. The bolt 8 is partly housed in both the upper leg members 9a, 10a. The upper leg member 10a comprises a further passage (not shown) opposing the passage 13. The further passage enables the bolt 8 to extend into the upper leg member 10a to provide the bolt 8 with a robust two point connection with the wheel fork 1 when the bolt is in its block state. The material at the passage 13 and the further passage may comprise a hardened metal to provide theft protection while using a minimum amount of high grade material. The further passage and the point of connection 23 may be provided at opposite sides of the upper leg member 10a and adjacent the lock system 5.

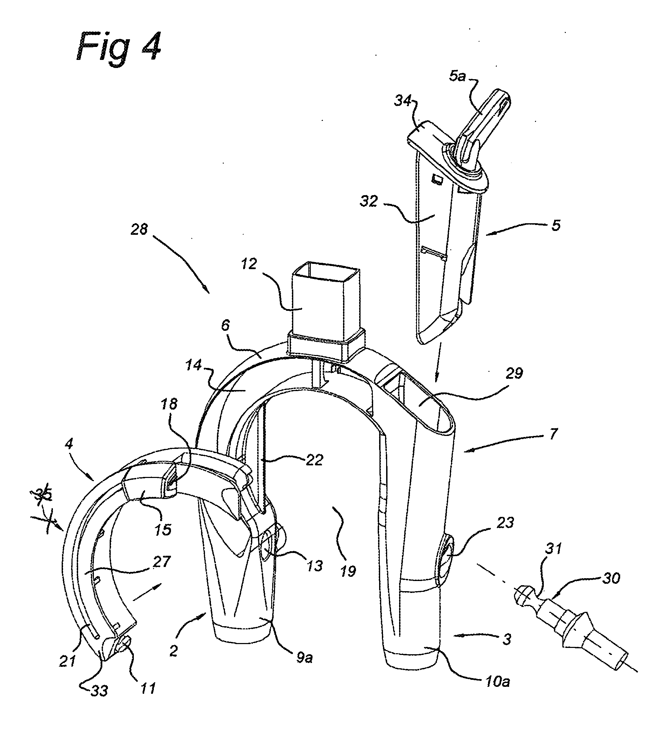

Fig 4. shows the central part 28 in an exploded view. The central part 28 of the wheel fork 1 may comprise a housing 7 to accommodate a bolt system 4 and a lock system 5. The housing may be provided with a cavity 14 to accommodate the bolt system 4 therein, and a recess 29 to accommodate a lock system 5 therein. The bolt system 4 and the lock system 5 may be provided in a fork leg 2, 3 of the wheel fork 1, more specifically the bolt system 4 and the lock system 5 may be provided in different fork legs 2, 3 of the wheel fork 1. In this case the bolt system 4 is accommodated the cavity in the first fork leg, upper leg member 9a, and the lock system 5 is accommodated in the second fork leg in recess 29 in the upper leg member 10a opposite the upper leg member 9a. The cavity 14 has an opening in the wall of the fork. In this embodiment the opening is in the back side. The opening can also be provided in one of the other sides. It may also be possible to provide the opening in two sides, even adjacent sides.

The recess opens to the upper side of the fork in the second leg 3. The opening may also be in other sides. The upper side provides a very good position as it is easy to operate the lock and it is easy to insert the lock system from that side.

The wheel fork with first and second fork legs and integrated central part 28 can be produced as one single part via moulding techniques from synthetic material, or composite comprising fiber reinforced synthetic material. It may also be produced from moulded aluminium, for instance.

The wall part of the lock system or bolt system or the frame carrying the bolt system and/or lock system and which closes off said cavity and/or recess can also be made from synthetic material or aluminium, for instance.

The bolt system 4 comprises the bolt 8 and a bolt supporting member 27 to facilitate an easy assembly of the bolt system 4 in the cavity 14. The bolt supporting member 27 may be provided with connection members like snap hooks to fixedly connect the bolt system 4 within the cavity 14 to the housing 7. Alternatively, the bolt system housing may be snapped into cavity 14, or it may be attached using screws or other attachment provisions. It its locking position, bolt 8 prevents the bolt system from being taken out of cavity 14. The bolt 8 may be provided with a notch 11 at its end facing the wheel accommodation space 19. In this case the housing 7 comprises a slot 21. It is conceivable that the slit or slot 21 is provided in the housing wall 6 that encloses the cavity. The operating member 15 extends through the slot 21 towards the bolt 4. The operating member 15 is fixedly connected with the bolt 8 to move the bolt between its block state and its release state. Furthermore, bolt system 4 may comprise a wall part 33 for closing off the opening in cavity.

The lock system 5 comprises a locking member (not shown) to lock the bolt 8, specifically to lock the bolt 8 in its block state when the bolt 8 extends into the recess 29 that accommodates the lock system 5. The lock system housing 32 engages with the inner contour of the recess 29 to fixedly connect the locking system 5 with the housing 7. Lock system 5 further may comprise a wall part 34 for closing off the recess. The lock system housing may also be adapted to slide in and out of the recess 29. It may be attached via a snap connection or a screw. Alternatively, it may slide in and out freely. It will be blocked from sliding out of the recess 29 when blocking the bolt 8. A chain lock 30 may extend into the recess 29 via the point of connection 23. The locking member (not shown) may engage with both the notch 11 and the indentation 31 to lock the bolt 8 in its block state and lock the chain lock 30 with the wheel frame 1. Also in the state in which the lock system 5 locks the chain, the lock system housing is locked inside recess 29. It may further be possible to provide the lock system housing and the recess with complementary projections to allow a snap fit. Alternatively, a screw of other attachment means may be used.

The housing 7 may be manufactured by a moulding process, more specifically a injection moulding process. The housing 7 produced with a moulding process enables a modular design of the wheel fork 1, more specifically the central part 28 of the wheel fork 1, because of the design freedom that comes with a moulding process. The moulded housing 7 enables a precise mutual positioning of the bolt system 4 and the lock system 5, more specifically the bolt 8 and a locking member (not shown). The housing may comprise one or more materials from the group; plastic, zinc, aluminium, steel, hardened steel. The housing 7 may consist of a zinc alloy known as Zamac. The bolt 8 may comprise steel, more specifically hardened steel at the outline of the bolt 8 and a more ductile grade at the core of the bolt 8.

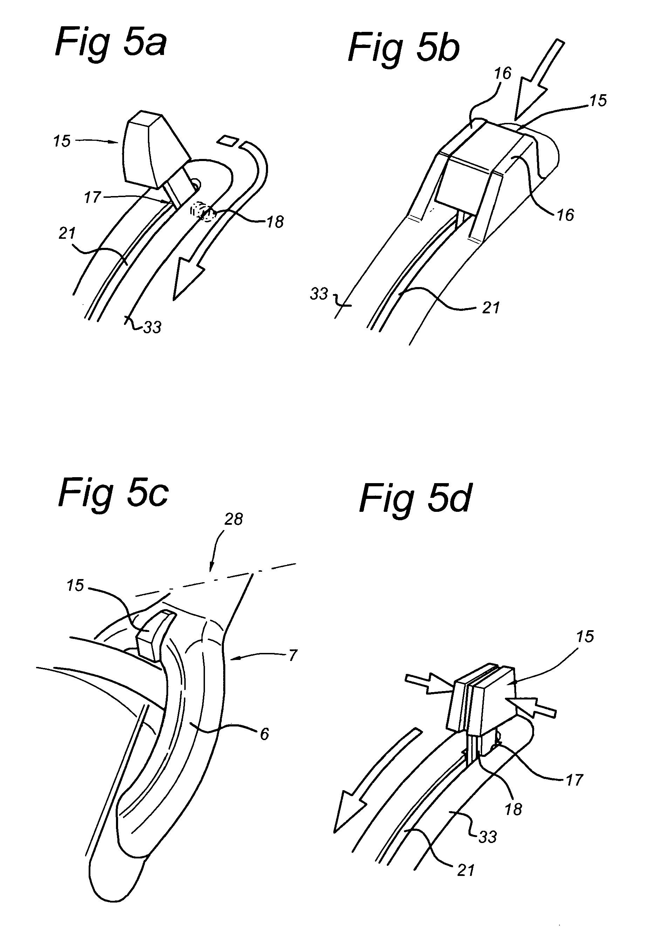

Fig. 5a-5d show various embodiments of an operating member 15 for a bolt 8 in a wheel fork 1. It is important to safeguard the operating member 15 against unintended operation. The slot 21 may comprise an abutment 17 provides a blocking position wherein the operating member 15 is blocked to render the bolt 8 inoperable. The operating member 15 may be forced towards the blocking position by means of a spring 18, specifically the operating member 15 comprises the spring 18. In an embodiment, the operating member 15 may be entirely accommodated between two wall members 16. It is unlikely for the operating member to be operated unintentionally when it is enclosed by the wall members 16. In an embodiment the operating member 15 is provided at the centre of the central part 28 of the wheel fork and extends along the housing wall 6.

It will also be obvious after the above description and drawings which are included to illustrate some embodiments of the invention, and not to limit the scope of protection. Starting from this disclosure, many more embodiments will be evident to a skilled person which are within the scope of protection as defined by the claims and which are obvious combinations of prior art techniques and the disclosure of this patent.

### List of reference numbers

- 1: Wheel fork
- 2,3: Leg of a fork
- 4: Bolt system
- 5: Lock system
- 5a: Key
- 6: Housing wall
- 7: Housing
- 8: Bolt
- 9a, 10a: Upper leg members
- 9b, 10b: Lower leg members
- 11: Notch
- 12: Mounting member
- 13: Passage
- 14: Cavity
- 15: Operating member
- 16: Wall member
- 17: Abutment
- 18: Spring
- 19: Wheel accommodation space
- 20: Wall of a fork
- 21: Slot
- 22: Strengthening rib
- 23: point of connection
- 24: Wheel
- 25: Frame part of a bike
- 26: Mudguard
- 27: Bolt supporting member
- 28: Central part of wheel fork
- 29: Recess
- 30: Chain lock
- 31: Notch or indentation

- 32: Housing of lock system
- 33: Bolt system wall part
- 34: Lock system wall part

## Claims

1. Wheel fork (1) with an integrated lock, for accommodating a wheel (24) therein, wherein the wheel fork (1) comprises:
- a first fork leg (2) and a second fork leg (3) which extend at opposite sides of a wheel accommodation space (19), the first fork leg (2) comprising a cavity (14) and a passage (13) in connection with the cavity (14) and facing the wheel accommodation space (19),
- a bolt system (4) comprising a ring-segment shaped bolt (8) having a ring-segment centre line, positioned in the cavity (14) in the first fork leg (2) in a bolt plane defined by said first and second fork leg (2, 3) and movable along its centre line between a release state and a blocking state, and which bolt (8) in its release state essentially extends in the cavity (14) and in its blocking state extends through the passage (13) towards the second fork leg (3) in the wheel accommodation space (19) to block the wheel, (24)
- a lock system (5) comprising a lock for locking said bolt (8) in its blocking state, wherein said first and second fork leg (2, 3) form at least part of a housing (7) of said bolt system (4) and lock system (5), **characterised in that** the lock system (5) engages with an end of the bolt (8) facing the wheel accommodation space (19) to block the bolt (8) in its blocking state.

2. Wheel fork (1) according to claim 1, wherein the end of the bolt (8) facing the wheel accommodation space (19) comprises a notch (11) and the lock system (5) comprises a locking member engaging the notch (11) to lock the bolt (8) in its blocking state.

3. Wheel fork (1) according to claim 1, wherein the wheel fork (1) further comprises a recess (29) for accommodating the lock system (5) therein, and wherein the lock system (5) locks the bolt (8) in the release state and/or block state, and wherein the recess (29) for accommodating the lock system (5) therein is provided in the second (3) fork leg.

4. Wheel fork (1) according to any one of the preceding claims, wherein the cavity (14) is essentially provided within a circumferential fork wall (20) and/or the first fork leg (2) is essentially hollow.

5. Wheel fork (1) according to any one of the preceding claims accommodating the integrated lock for preventing forcing of the bolt system (4) and/or lock system (5).

6. Wheel fork (1) according to any one of the preceding claims, wherein the cavity (14) has an opening in at least one fork wall (20) of said first fork leg (2), and wherein, preferably, said bolt system (4) comprises a wall part (33) closing off said opening in said cavity (14).

7. Wheel fork (1) according to any one of the preceding claims, wherein the bolt (8) in the blocking state at least partially extends into the second fork leg (3) substantially opposite the passage (13).

8. Wheel fork (1) according to claim 3, wherein said lock system (5) further comprises a wall part (34) for closing off said recess (29).

9. Wheel fork (1) according to any one of the preceding claims, wherein the wheel fork walls (20) mainly determine the mechanical strength of the wheel fork (1).

10. Wheel fork (1) according to any one of the preceding claims, wherein the bolt system (4) comprises an operating member (15) for moving the bolt (8) in the cavity (14) between the release state and the block state, wherein the operating member (15) extends in a slot (21) in the first fork leg (2), and outside the first fork leg (2) to provide direct access to the operating member (15) to make the bolt (8) operable, and wherein preferably the wheel fork (1) comprises means (17) to inhibit operation of the operating member (15), and wherein preferably the inhibiting means (17) comprise; an abutment (17) which provides a blocking position wherein the operating member (15) is blocked and the bolt (8) inoperable, a spring (18) biasing the operating member (15) towards its blocking position, and wherein preferably the operating member (15) comprises the spring (18), and wherein preferably the line of force of the spring (18) is essentially perpendicular to the bolt plane.

11. Wheel fork according to any one of claims 1 to 9, wherein the bolt system (4) comprises an operating member (15) for moving the bolt (8) in the cavity (14) between the release state and the block state, wherein the operating member (15) extends in a slot (21) in the first fork leg (2), and outside the first fork leg (2) to provide direct access to the operating member (15) to make the bolt (8) operable, and wherein preferably the wheel fork (1) comprises means (16) to inhibit operation of the operating member (15), and wherein preferably the inhibiting means (16) comprise a projecting wall member (16) that extends along the operating member (15) from the outer circumference of the first fork leg (2), wherein the operating member (15) is inside the perimeter of the projecting wall member (16) when the bolt (8) is in the release state.

12. Wheel fork (1) according to claim 3, wherein the lock system (5) comprises a lock system housing (32) which can slide in and out of said recess (29), and which locks in said recess (29) at least when said lock system (5) locks said bolt (8).

13. Wheel fork (1) according to any one of the preceding claims, wherein the bolt system (4) comprises a bolt system housing which can slide in and out of said cavity (14) and wherein said bolt (8) in its locking state locks said bolt system (4) in said cavity (14), which bolt system housing preferably comprises an attachment means for locking or snapping said bolt system (4) in said cavity (14).

14. Method for assembling the wheel fork (1) of claim 3, comprising the steps of:
- providing a wheel fork (1) constituting housing (7) comprising a cavity (14) and a recess (29);
- assemble the bolt system (4) into the cavity (14);
- assemble the lock system (5) in the recess (29).

15. Method for operating the bolt (8) of the integrated lock of the wheel fork (1) of claim 10, comprising the steps of:
- moving operating member (15) against a biasing force away from a blocked position to make the bolt (8) operable,
- shifting the bolt (8) by means of the operating member (15).

## Patentansprüche

1. Radgabel (1) mit einem integrierten Schloss, zur Aufnahme eines Rades (24) darin, wobei die Radgabel (1) aufweist:
- ein erstes Gabelbein (2) und ein zweites Gabelbein (3), die sich auf gegenüberliegenden Seiten eines Radaufnahmeraumes (19) erstrecken, wobei das erste Gabelbein (2) einen Hohlraum (14) und einen Durchlass (13) aufweist, der mit dem Hohlraum (14) in Verbindung ist und zu dem Radaufnahmeraum (19) hingerichtet ist,
- ein Riegelsystem (4), das einen als Ringsegment geformten Riegel (8) mit einer Ringsegment-Längsachse aufweist, der in dem Hohlraum (14) in dem ersten Gabelbein (2) in einer Riegelebene angeordnet ist, die durch das erste und das zweite Gabelbein (2, 3) bestimmt ist, und der entlang seiner Längsachse zwischen einer Freigabestellung und einer Blockierstellung bewegbar ist, und der Riegel (8) sich in seiner Freigabestellung im wesentlichen in dem Hohlraum (14) und in seiner Blockierstellung durch den Durchlass (13) in Richtung des zweiten Gabelbeins (3) in den Radaufnahmeraum (19) zum Blockieren des Rades (24) erstreckt,
- ein Verriegelungssystem (5), das eine Verriegelung zum Arretieren des Riegels (8) in seiner Blockierstellung aufweist, wobei das erste und das zweite Gabelbein (2, 3) wenigstens ein Teil eines Gehäuses (7) des Riegelsystems (4) und des Verriegelungssystems (5) bilden,
**dadurch gekennzeichnet, dass** das Verriegelungssystem (5) mit einem zu dem Radaufnahmeraum (19) weisenden Ende des Riegels (8) in Eingriff ist, um den Riegel (8) in seiner Blockierstellung zu arretieren.

2. Radgabel (1) nach Anspruch 1, wobei das zum Radaufnahmeraum (19) weisende Ende des Riegels (8) eine Einbuchtung (11) aufweist und das Verriegelungssystem (5) ein in die Einbuchtung (11) eingreifendes Arretierungsmittel aufweist, um den Riegel (8) in seiner Blockierstellung zu arretieren.

3. Radgabel (1) nach Anspruch 1, wobei die Radgabel (1) ferner eine Aussparung (29) für die Aufnahme des Verriegelungssystems (5) darin aufweist, und wobei das Verriegelungssystem (5) den Riegel (8) in der Freigabestellung und/oder der Blockierstellung arretiert und wobei die Aussparung (29) zur Aufnahme des Verriegelungssystems (5) darin in dem zweiten Gabelbein (3) angeordnet ist.

4. Radgabel (1) nach einem der vorstehenden Ansprüche, wobei der Hohlraum (14) im wesentlichen innerhalb einer umlaufenden Gabelwand (20) angeordnet ist und/oder das erste Gabelbein (2) im wesentlichen hohl ist.

5. Radgabel (1) nach einem der vorstehenden Ansprüche, die das zum Verhindern der Betätigung des Riegelsystems (4) und/oder des Verriegelungssystems (5) integrierte Schloss aufnimmt.

6. Radgabel (1) nach einem der vorstehenden Ansprüche, wobei der Hohlraum (14) eine Öffnung in wenigstens einer Gabelwand (20) des ersten Gabelbeins (2) hat, und wobei vorzugsweise das Riegelsystem (4) ein Wandteil (33) aufweist, das die Öffnung in dem Hohlraum (14) schließt.

7. Radgabel (1) nach einem der vorstehenden Ansprüche, wobei sich der Riegel (8) in der Blockierstellung mindestens teilweise in das zweite Gabelbein (3) im wesentlichen dem Durchlass (13) gegenüberliegend erstreckt.

8. Radgabel (1) nach Anspruch 3, wobei das Verriegelungssystem (5) weiter ein Wandteil (34) zum Schließen der Aussparung (29) aufweist.

9. Radgabel (1) nach einem der vorstehenden Ansprüche, wobei die Radgabelwände (20) vornehmlich die mechanische Festigkeit der Radgabel (1) bestimmt.

10. Radgabel (1) nach einem der vorstehenden Ansprüche, wobei das Riegelsystem (4) ein Betätigungselement (15) zum Bewegen des Riegels (8) in dem Hohlraum (14) zwischen der Freigabestellung und der Blockierstellung aufweist, wobei sich das Betätigungselement (15) in einem Schlitz (21) in dem ersten Gabelbein (2) erstreckt, und außerhalb des ersten Gabelbeins (2), um direkten Zugriff auf das Betätigungselement (15) zu ermöglichen, um den Riegel (8) betätigbar zu machen, und wobei vorzugsweise die Radgabel (1) Mittel (17) aufweist, um das Betätigen des Betätigungselementes (15) zu verhindern, und wobei vorzugsweise die verhindernden Mittel (17) aufweisen ein Widerlager (17), das eine Arretierungsstellung bereitstellt, in der das Betätigungselement (15) blockiert und der Riegel (8) unbetätigbar ist, eine Feder (18), die das Betätigungselement (15) in Richtung seiner Arretierungsstellung vorspannt, und wobei vorzugsweise das Betätigungselement (15) die Feder (18) aufweist, und wobei vorzugsweise die Kraftachse der Feder (18) im wesentlichen senkrecht zu der Riegelebene ist.

11. Radgabel (1) nach einem der vorstehenden Ansprüche 1 bis 9, wobei das Riegelsystem (4) ein Betätigungselement (15) zum Bewegen des Riegels (8) in dem Hohlraum (14) zwischen der Freigabestellung und der Blockierstellung aufweist, wobei sich das Betätigungselement (15) in einem Schlitz (21) in dem ersten Gabelbein (2) erstreckt, und außerhalb des ersten Gabelbeins (2), um direkten Zugriff auf das Betätigungselement (15) zu ermöglichen, um den Riegel (8) betätigbar zu machen, und wobei vorzugsweise die Radgabel (1) Mittel (16) aufweist, um das Betätigen des Betätigungselementes (15) zu verhindern, und wobei vorzugsweise die verhindernden Mittel (16) einen vorstehenden Wandabschnitt (16) aufweisen, das sich entlang dem Betätigungselement (15) an dem äußeren Umfang des ersten Gabelbeins (2) erstreckt, wobei sich das Betätigungselement (15) innerhalb des Umkreises des vorstehenden Wandabschnittes (16) befindet, wenn der Riegel (8) in der Freigabestellung ist.

12. Radgabel (1) nach Anspruch 3, wobei das Verriegelungssystem (5) ein Verriegelungssystemgehäuse (32) aufweist, das in die Aussparung (29) hinein- und daraus herausgleiten kann, und das sich in der Aussparung (29) wenigstens dann verriegelt, wenn das Verriegelungssystem (5) den Riegel (8) arretiert.

13. Radgabel (1) nach einem der vorstehenden Ansprüche, wobei das Riegelsystem (4) ein Riegelsystemgehäuse aufweist, das in den Hohlraum (14) hinein- und daraus herausgleiten kann, und wobei der Riegel (8) in seiner Blockierstellung das Riegelsystem (4) in dem Hohlraum (14) verriegelt, wobei das Riegelsystemgehäuse vorzugsweise ein Befestigungsmittel zum Verriegeln in dem oder Einschnappen des Riegelsystems (4) in den im Hohlraum (14) aufweist.

14. Methode zur Montage der Radgabel (1) gemäß Anspruch 3, aufweisend die folgenden Schritte:
- Bereitstellen eines eine Radgabel (1) bildenden Gehäuses (7), das einen Hohlraum (14) und eine Aussparung (29) aufweist;
- Einsetzen des Riegelsystems (4) in den Hohlraum (14);
- Einsetzen des Verriegelungssystems (5) in die Aussparung (29).

15. Methode zum Betätigen des Riegels (8) des integrierten Schlosses der Radgabel (1) gemäß Anspruch 10, aufweisend die folgenden Schritte:
- Bewegen des Betätigungselementes (15) entgegen einer vorspannenden Kraft weg von der Arretierstellung, um den Riegel (8) betätigbar zu machen;
- Schieben des Riegels (8) mittels des Betätigungselements (15).

## Revendications

1. Fourche de roue (1) munie d'un verrou intégré, pour recevoir une roue (24), la fourche de roue comprenant :
- un premier fourreau (2) et un deuxième fourreau (3) qui s'étendent sur des côtés opposés d'un espace de réception d'une roue (19), le premier fourreau (2) comprenant une cavité (14) et un passage (13) relié à la cavité (14) et faisant face à l'espace de réception de roue (19),
- un système de blocage (4) comprenant un élément de blocage en forme de segment d'anneau (8) ayant un axe central de segment d'anneau, positionné dans la cavité (14) dans le premier fourreau (2) dans un plan de l'élément de blocage défini par lesdits premier et deuxième fourreaux (2, 3) et mobile le long de son axe central entre un état de libération et un état de blocage, et ledit élément de blocage (8) dans son état de libération s'étend sensiblement dans la cavité (14) et dans son état de blocage s'étend à travers le passage (13) en direction du deuxième fourreau (3) dans l'espace de réception de roue (19) pour bloquer la roue (24),
- un système de verrouillage (5) comprenant un verrou pour verrouiller ledit élément de blocage (8) dans son état de blocage, lesdits premier et deuxième fourreaux (2, 3) formant au moins une partie d'un logement (7) dudit système de blocage (4) et dudit système de verrouillage (5),
**caractérisée en ce que** le système de verrouillage (5) vient en prise avec une extrémité de l'élément de blocage (8) faisant face à l'espace de réception de roue (19) pour bloquer l'élément de blocage (8) dans son état de blocage.

2. Fourche de roue (1) selon la revendication 1, dans laquelle l'extrémité de l'élément de blocage (8) faisant face à l'espace de réception de roue (19) comprend une encoche (11) et le système de verrouillage (5) comprend un élément de verrouillage venant en prise avec l'encoche (11) pour verrouiller l'élément de blocage (8) dans son état de blocage.

3. Fourche de roue (1) selon la revendication 1, dans laquelle la fourche de roue comprend en outre un évidement (29) destiné à recevoir le système de verrouillage (5), et dans laquelle le système de verrouillage (5) verrouille l'élément de blocage (8) dans son état de libération et/ou dans son état de blocage, et dans laquelle l'évidement (29) destiné à recevoir le système de verrouillage (5) est prévu dans le deuxième fourreau (3).

4. Fourche de roue (1) selon l'une quelconque des revendications précédentes, dans laquelle la cavité (14) est prévue essentiellement dans une paroi périphérique de fourche (20) et/ou le premier fourreau (2) est sensiblement creux.

5. Fourche de roue (1) selon l'une quelconque des revendications précédentes, recevant le verrou intégré pour empêcher que le système de verrouillage (5) et/ou le système de blocage (4) soient forcés.

6. Fourche de roue (1) selon l'une quelconque des revendications précédentes, dans laquelle la cavité (14) présente une ouverture dans au moins une paroi de fourche (20) dudit premier fourreau (2), et dans laquelle, de préférence, ledit système de blocage (4) comprend une partie de paroi (33) fermant ladite ouverture dans ladite cavité (14).

7. Fourche de roue (1) selon l'une quelconque des revendications précédentes, dans laquelle l'élément de blocage (8) dans l'état de blocage s'étend au moins en partie dans le deuxième fourreau (3) sensiblement à l'opposé du passage (13).

8. Fourche de roue (1) selon la revendication 3, dans laquelle ledit système de verrouillage (5) comprend en outre une partie de paroi (34) pour fermer ledit évidement (29).

9. Fourche de roue (1) selon l'une quelconque des revendications précédentes, dans laquelle les parois de fourche (20) déterminent principalement la résistance mécanique de la fourche (1).

10. Fourche de roue (1) selon l'une quelconque des revendications précédentes, dans laquelle le système de blocage (4) comprend un élément de commande (15) pour déplacer l'élément de blocage (8) dans la cavité (14) entre l'état de libération et l'état de blocage, dans laquelle l'élément de commande (15) s'étend dans une fente (21) dans le premier fourreau (2), et à l'extérieur du premier fourreau (2) pour fournir un accès direct à l'élément de commande (15) afin que l'élément de blocage (8) puisse être actionné, et dans laquelle de préférence la fourche de roue (1) comprend un moyen (17) pour empêcher un actionnement de l'élément de commande (15), et dans laquelle de préférence le moyen d'inhibition (17) comprend une butée (17) qui défini une position de blocage dans laquelle l'élément de commande (15) est bloqué et dans laquelle l'élément de blocage (8) ne peut pas être actionné, un ressort (18) sollicitant l'élément de commande (15) vers sa position de blocage, et dans laquelle de préférence l'élément de commande (15) comprend le ressort (18), et dans laquelle de préférence la ligne de force du ressort (18) est sensiblement perpendiculaire au plan de l'élément de blocage.

11. Fourche de roue (1) selon l'une quelconque des revendications 1 à 9, dans laquelle le système de blocage (4) comprend un élément de commande (15) pour déplacer l'élément de blocage (8) dans la cavité (14) entre l'état de libération et l'état de blocage, dans laquelle l'élément de commande (15) s'étend dans une fente (21) dans le premier fourreau (2), et à l'extérieur du premier fourreau (2) pour fournir un accès direct à l'élément de commande (15) afin que l'élément de blocage (8) puisse être actionné, et dans laquelle de préférence la fourche de roue (1) comprend un moyen (16) pour empêcher un actionnement de l'élément de commande (15), et dans laquelle de préférence le moyen d'inhibition (16) comprend un élément de paroi en saillie (16) qui s'étend le long de l'élément de commande (15) depuis la circonférence extérieure du premier fourreau (2), dans laquelle l'élément de commande (15) se trouve à l'intérieur du périmètre de l'élément de paroi en saillie (16) lorsque l'élément de blocage (8) est dans l'état de libération.

12. Fourche de roue (1) selon la revendication 3, dans laquelle le système de verrouillage (5) comprend un logement de système de verrouillage (32) qui peut coulisser dans et hors dudit évidement (29), et qui se verrouille dans ledit évidement (29) au moins quand ledit système de verrouillage (5) verrouille ledit élément de blocage (8).

13. Fourche de roue (1) selon l'une quelconque des revendications précédentes, dans laquelle le système de blocage (4) comprend un logement de système de blocage qui peut coulisser dans et hors de ladite cavité (14) et dans laquelle ledit élément de blocage (8) dans son état de verrouillage verrouille ledit système de blocage (4) dans ladite cavité (14), ledit logement de système de blocage comprenant de préférence un moyen de fixation pour verrouiller ou accrocher ledit système de blocage (4) dans ladite cavité (14).

14. Procédé d'assemblage de la fourche de roue (1) de la revendication 3, comprenant les étapes consistant à :
- fournir une fourche de roue (1) constituant un logement (7) comprenant une cavité (14) et un évidement (29) ;
- assembler le système de blocage (4) dans la cavité (14) ;
- assembler le système de verrouillage (5) dans l'évidement (29).

15. Procédé d'actionnement de l'élément de blocage (8) du verrou intégré de la fourche de roue (1) de la revendication 10, comprenant les étapes consistant à :
- déplacer un élément de commande (15) à l'encontre d'une force de sollicitation en l'éloignant d'une position de blocage afin que l'élément de blocage (8) puisse être actionné,
- déplacer l'élément de blocage (8) au moyen de l'élément de commande (15).
